# EUROPEAN PATENT APPLICATION

(11) **EP 3 757 704 A1**
(43) Date of publication of application: **30.12.2020**
(21) Application number: 19756575.7
(22) Date of filing: 18.02.2019
(51) Int. Cl.: G05B 23/02, G01M 7/02

(54) **SYSTEM IDENTIFICATION DEVICE, SYSTEM IDENTIFICATION METHOD, AND RECORDING MEDIUM**

(30) Priority: 21.02.2018 JP 2018029218
(71) Applicant: NEC Corporation, 108-8001 Tokyo (JP)
(72) Inventor: TAKATA Soichiro, Tokyo 108-8001 (JP); INOUE Hirofumi, Tokyo 108-8001 (JP); SHINODA Shigeki, Tokyo 108-8001 (JP); KIKUCHI Katsumi, Tokyo 108-8001 (JP)
(74) Representative: Betten & Resch
(86) International application number: PCT/JP2019/005805
(87) International publication number: WO 2019/163701

(57) **Abstract**

A system identification device 1 includes an analysis unit 105 that calculates a self-frequency response function on the basis of an input signal and an output signal measured by a measurement unit 103 at a position where a subject physical system 106 has been excited by a vibrating unit 102. The analysis unit 105 performs system identification of the subject physical system 106 by using an impulse response function obtained from the calculated self-frequency response function and an impulse response function of a virtual two-degrees-of-freedom model modeling the subject physical system 106 that is the subject of analysis. This makes it possible to perform system identification of systems with close eigenvalues.

## Description

### [Technical Field]

The present invention relates to a system identification device, a system identification method, and a recording medium.

### [Background Art]

When monitoring and controlling a plant system for oil, gas, water, or the like, and a physical system such as an industrial robot, by using Internet of Things (IoT), a modeling technique for a target system is important. As the modeling technique, there is a technique for performing mathematical modeling of a physical system, based on observed data (for example, see PTLs 1 to 4, and NPL 1).

### [Citation List]

### [Patent Literature]

[PTL 1] International Publication No. WO2015/118737
[PTL 2] International Publication No. WO2015/059956
[PTL 3] Japanese Unexamined Patent Application Publication No. H04-77798
[PTL 4] Japanese Unexamined Patent Application Publication No. H03-217901

### [Non Patent Literature]

[NPL 1] NAKAMIZO Takayoshi, "Signal Analysis and System Identification", pp. 22 to 24, 49 to 53, and 121 to 127, CORONA PUBLISHING, 1988.

### [Summary of Invention]

### [Technical Problem]

However, when a target system of modeling is a system having close eigenvalues such as a system in which a beat phenomenon or resonance occurs, system identification by the techniques described in PTLs 1 to 4 and NPL 1 may be difficult. Note that, it is assumed that the system having close eigenvalues includes a system having a multiple root into which the eigenvalues are degenerated.

An object of the present invention is to provide a system identification device and the like capable of performing system identification of a system having close eigenvalues.

### [Solution to Problem]

According to a first aspect of the present invention, a system identification device includes an analysis unit for calculating a self-frequency response function, based on an input signal and an output signal being measured at a position where an analysis target is excited, and performing system identification of the analysis target by using an impulse response function acquired from the calculated self-frequency response function, and an impulse response function of a virtual two-degree-of-freedom model in which the analysis target is modeled.

According to a second aspect of the present invention, a system identification method includes: a excitation step of exciting an analysis target; a measurement step of measuring an input signal and an output signal at a position where the analysis target is excited in the excitation step; and an analysis step of calculating a self-frequency response function, based on the input signal and the output signal being measured in the measurement step, and performing system identification of the analysis target by using an impulse response function acquired from the calculated self-frequency response function, and an impulse response function of a virtual two-degree-of-freedom model in which the analysis target is modeled.

According to a third aspect of the present invention, a recording medium records a program causing a computer to execute an analysis step of calculating a self-frequency response function, based on an input signal and an output signal being measured at a position where an analysis target is excited, and performing system identification of the analysis target by using an impulse response function acquired from the calculated self-frequency response function, and an impulse response function of a virtual two-degree-of-freedom model in which the analysis target is modeled.

### [Advantageous Effects of Invention]

According to the present invention, it is possible to perform system identification of a system having close eigenvalues.

### [Brief Description of Drawings]

[Fig. 1] Fig. 1 is a block diagram illustrating a configuration of a system identification device according to a first example embodiment of the present invention.
[Fig. 2] Fig. 2 is a flowchart illustrating processing of the system identification device according to the first example embodiment.
[Fig. 3] Fig. 3 is a block diagram illustrating a configuration of a system identification device according to a second example embodiment.
[Fig. 4] Fig. 4 is a flowchart illustrating processing of the system identification device according to the second example embodiment.
[Fig. 5] Fig. 5 is a block diagram illustrating a configuration of a system identification device according to a third example embodiment.
[Fig. 6] Fig. 6 is a diagram illustrating a situation of a hydrant coupler according to the third example embodiment.
[Fig. 7] Fig. 7 is a diagram illustrating an assumed virtual two-degree-of-freedom model according to the third example embodiment.
[Fig. 8] Fig. 8 is a diagram illustrating a system identification result according to the third example embodiment.
[Fig. 9] Fig. 9 is a diagram illustrating a result of a system identification experiment.
[Fig. 10] Fig. 10 is a diagram illustrating a comparison result of an identification method using an autoregressive model, and the present example embodiment.
[Fig. 11] Fig. 11 is a block diagram illustrating a minimum configuration of the system identification device according to the example embodiment of the present invention.

### [Example Embodiment]

In the following, one example embodiment of the present invention is described with reference to the drawings.

An observation-data-based mathematical modeling method of a physical system is called a "system identification problem". The problem is broadly classified into (1) a case where an input signal and an output signal of a system are known, and (2) a case where an input is unknown. Further, a technique using a time domain signal or a frequency domain signal is also known.

In a technique using time domain information, a polynomial model such as an autoregressive model (AR model), a moving average model (MA model), an autoregressive moving average model (ARMA model), and an auto-regressive exogeneous model (ARX model) is used. In a polynomial model, a frequency domain is flattened, and thus application to a system having close eigenvalues that are closely spaced different eigenvalues is difficult. On the other hand, in a case where frequency domain information is used, peak positions of both eigenvalues are often unclear, and thus a curvature fitting method cannot be applied. In particular, the peak positions may even be visually unrecognizable, depending on the number of samples of a frequency domain by a Fourier transform.

As described above, since eigenvalues are adjacent in a system having close eigenvalues, it is difficult to identify the system by using a frequency-domain identification method and time-domain identification method. Thus, a system identification problem of a system having close eigenvalues is a problem that is not thoroughly solved yet. A system identification device and the like according to the present example embodiment solve such a problem, and perform system identification of a system (including a system having a multiple root of which eigenvalues overlap) having close eigenvalues.

### [First Example Embodiment]

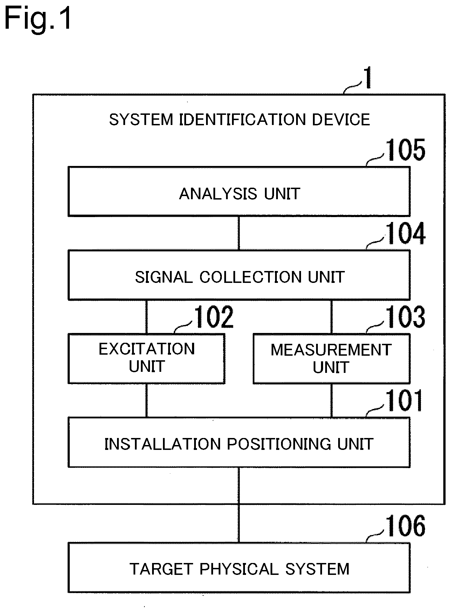

Fig. 1 is a block diagram illustrating a configuration of a system identification device 1 according to a first example embodiment. The system identification device 1 includes an installation positioning unit 101, an excitation unit 102, a measurement unit 103, a signal collection unit 104, and an analysis unit 105. A target physical system 106 is a target of identification by the system identification device 1. The installation positioning unit 101 installs the excitation unit 102 and the measurement unit 103 on the target physical system 106. The excitation unit 102 excites the target physical system 106, via the installation positioning unit 101. The measurement unit 103 detects an input signal to and an output signal from the target physical system 106 when the excitation unit 102 excites, via the installation positioning unit 101, target physical system 106. The signal collection unit 104 makes the input signal and the output signal detected by the measurement unit 103 into data. The analysis unit 105 analyzes the data acquired by the signal collection unit 104, and performs system identification of the target physical system 106.

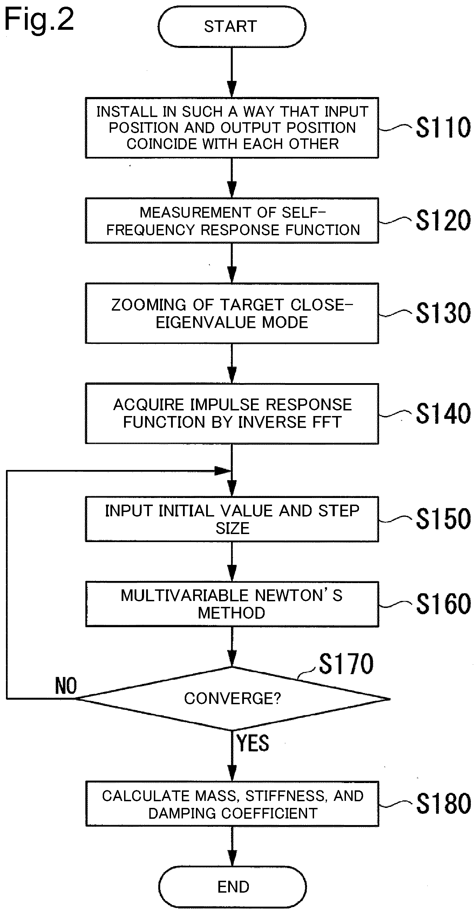

Fig. 2 is a flowchart illustrating processing of the system identification device 1. A measurer installs the excitation unit 102 and the measurement unit 103 on the target physical system 106, via the installation positioning unit 101 (step S110). In this occasion, an input position and an output position are made to coincide with each other. The input position is a position in which the excitation unit 102 is installed, that is, a position where a cause of vibration is input. The output position is a position on which the measurement unit 103 is installed, that is, a position where vibration of the target physical system 106 is measured.

In order to measure a self-frequency response function, the excitation unit 102 excites the target physical system 106, via the installation positioning unit 101. The measurement unit 103 detects an input signal of vibration to the target physical system 106, and an output signal of vibration from the target physical system 106. The signal collection unit 104 makes the input signal and the output signal detected by the measurement unit 103 into data, and output the data to the analysis unit 105. The analysis unit 105 analyses the acquired data. Specifically, at first, the analysis unit 105 applies fast Fourier transform (FFT) on each of the input signal and the output signal. The analysis unit 105 acquires a self-frequency response function by dividing the output signal by the input signal in a frequency domain (step S120).

Next, the analysis unit 105 performs zooming in the self-frequency response function, only on a frequency band in which target close eigenvalues exist (step S130). The analysis unit 105 acquires an impulse response function of the self-frequency response function by applying inverse Fourier transform to the self-frequency response function on which zooming is performed (step S140).

The analysis unit 105 receives input of an initial value and a step size to be used in next step S160 (step S150). The analysis unit 105 applies, to the impulse response function acquired in step S140, a multivariable Newton's method using an impulse response function of a virtual two-degree-of-freedom system, which will be described later (step S160). When executing the multivariable Newton's method, the analysis unit 105 uses the initial value and the step size input in step S150.

When determining that a solution is not converged (step S170:NO), the analysis unit 105 returns to step S150, newly receives input of an initial value and a step size to be used, and performs the processing of step S160. When determining that a solution is converged (step S170:YES), the analysis unit 105 acquires a mass, a stiffness constant, and a damping coefficient of a system of the target physical system 106, based on an impulse response function of a virtual two-degree-of-freedom system when the solution is converged, and performs system identification (step S180).

According to the present example embodiment, it is possible to perform system identification of a system having close eigenvalues.

### [Second Example Embodiment]

The present example embodiment applies the first example embodiment to system identification of a pipeline.

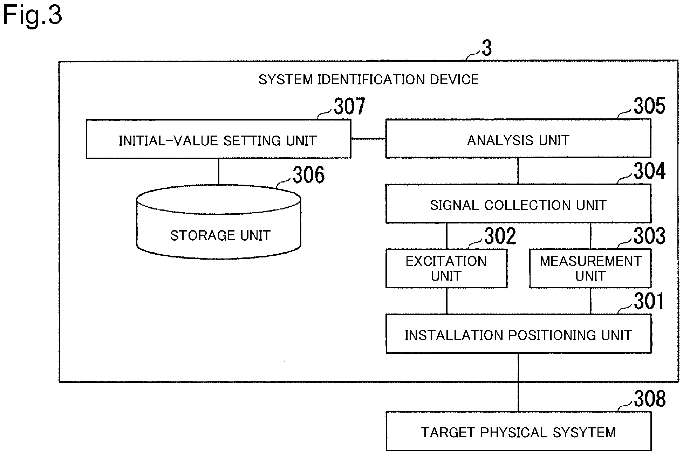

Fig. 3 is a block diagram illustrating a configuration of a system identification device 3 according to a second example embodiment. The system identification device 3 includes an installation positioning unit 301, an excitation unit 302, a measurement unit 303, a signal collection unit 304, an analysis unit 305, a storage unit 306, and an initial-value setting unit 307. A target physical system 308 is a pipeline, and is a target of identification by the system identification device 3.

The installation positioning unit 301, the excitation unit 302, the measurement unit 303, and the signal collection unit 304 respectively have a function similar to the installation positioning unit 101, the excitation unit 102, the measurement unit 103, and the signal collection unit 104 according to the first example embodiment. The storage unit 306 stores pipeline management-ledger data. The pipeline management-ledger data includes information about a diameter, a material type, and a wall thickness being physical data of the target physical system 308. The initial-value setting unit 307 calculates, based on the data of a diameter, a material type, and a wall thickness read from the storage unit 306, an initial value of a parameter of the multivariable Newton's method used in the analysis unit 305. The analysis unit 305 has a function similar to the analysis unit 105 according to the first example embodiment, except for a point that an initial value calculated by the initial-value setting unit 307 is used in the multivariable Newton's method.

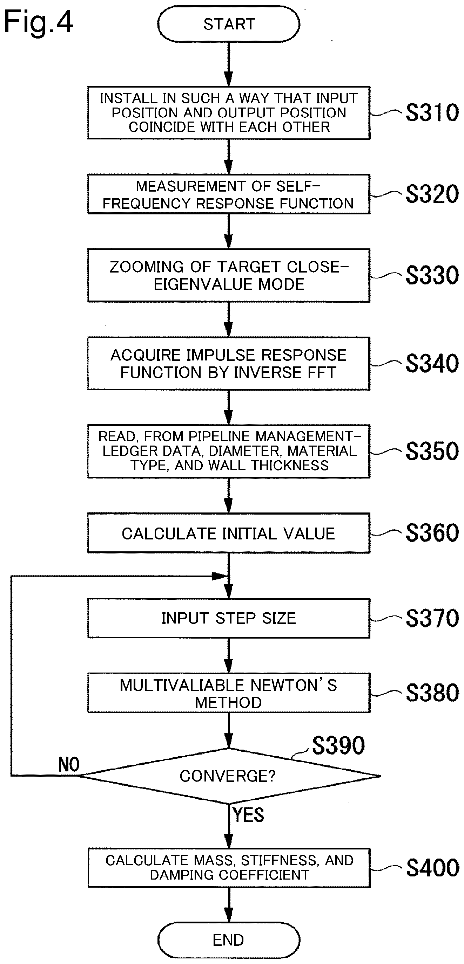

Fig. 4 is a flowchart illustrating processing of the system identification device 3. A measurer installs the excitation unit 302 and the measurement unit 303 on the target physical system 308, via the installation positioning unit 301 (step S310). The excitation unit 302 excites the target physical system 308, via the installation positioning unit 301. The measurement unit 303 detects an input signal to the target physical system 308 and an output signal from the target physical system 308 at an excitation position. The signal collection unit 304 makes the input signal and the output signal detected by the measurement unit 303 into data. The analysis unit 305 acquires a self-frequency response function by using the input signal and the output signal (step S320). The analysis unit 305 performs zooming in the self-frequency response function, only on a frequency band in which target close eigenvalues exist (step S330). The analysis unit 305 applies inverse Fourier transform to a part on which zooming is performed, and thereby acquires an impulse response function of the self-frequency response function (step S340).

The initial-value setting unit 307 reads, from the storage unit 306, data of a diameter, a material type, and a wall thickness of the target physical system 308 (step S350). The initial-value setting unit 307 calculates an initial value of a parameter of the multivariable Newton's method (step S360). The analysis unit 305 receives input of a step size (step S370). The analysis unit 305 applies, to the impulse response function acquired in step S340, the multivariable Newton's method using an impulse response function of a virtual two-degree-of-freedom system, which will be described later (step S380). In the multivariable Newton's method, the initial value calculated in step S360 and the step size input in step S370 are used.

When determining that a solution is not converged (step S390:NO), the analysis unit 305 returns to step S370, newly receives input of a step size to be used, and performs the processing of step S380. When determining that a solution is converged (step S390:YES), the analysis unit 305 acquires a mass, a stiffness constant, and a damping coefficient of a system of the target physical system 308, based on an impulse response function of a virtual two-degree-of-freedom system when the solution is converged, and performs system identification (step S400).

According to the present example embodiment, it is possible to perform system identification of a pipeline.

### [Third Example Embodiment]

Herein, the first example embodiment is applied to system identification of a water pipeline.

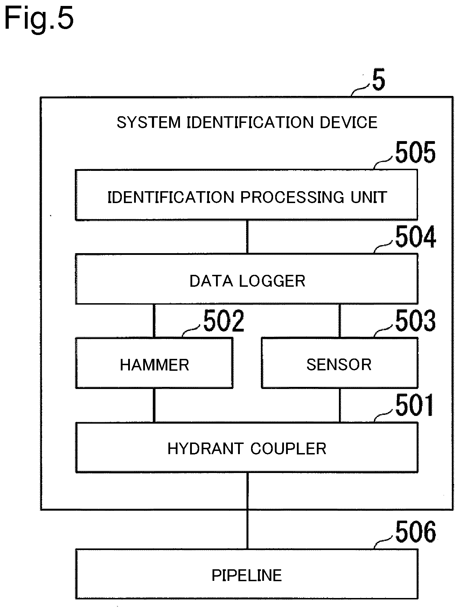

Fig. 5 is a block diagram illustrating a configuration of a system identification device 5 according to the present example embodiment. The system identification device 5 includes a hydrant coupler 501, a hammer 502, a sensor 503, a data logger 504, and an identification processing unit 505. A pipeline 506 is a water pipeline being a target of system identification by the system identification device 5. Examples of the hammer 502 include an impulse hammer with a built-in force sensor, a commercial hammer with an acceleration pickup installed therein, an electromagnetic exciter, and the like. Examples of the sensor 503 include an acceleration pickup, a laser Doppler velocimeter, a laser displacement gauge, a contact-type displacement gauge, and the like. The identification processing unit 505 is achieved by, for example, a processor, a memory, and a hard disk drive (HDD). The processor operates as the identification processing unit 505 by reading, from the HDD, an identification processing program for causing a computer to execute processing, and executing the program.

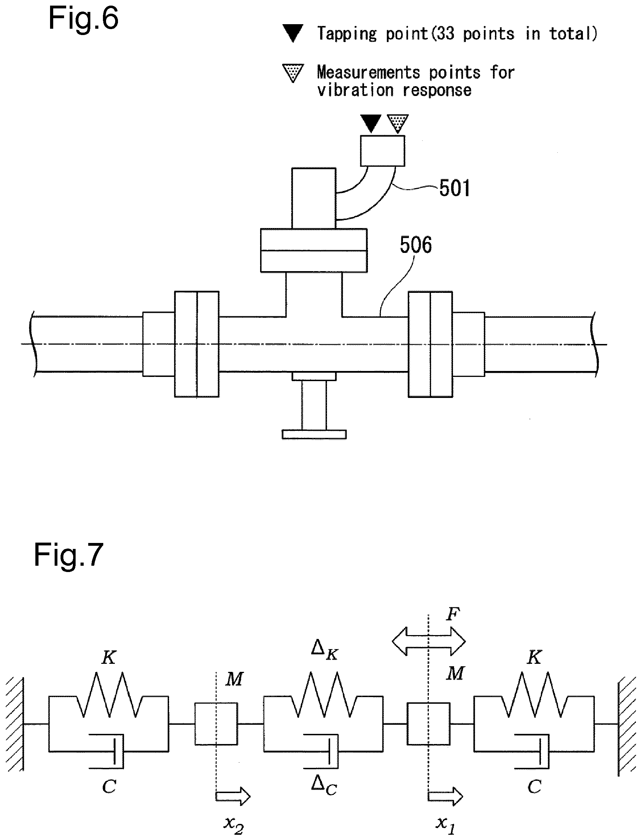

Fig. 6 is a diagram illustrating a situation of the hydrant coupler 501 installed on the pipeline 506. A measurer installs the hydrant coupler 501 and the sensor 503 on a pipeline 506 (step S110 in Fig. 2). A measurer taps, with the hammer 502, the hydrant coupler 501 illustrated in Fig. 6, and thereby excites the pipeline 506. The sensor 503 detects an after-excitation output signal in a measurement position (Measurements point for vibration response) same as a tapping position (tapping point). The data logger 504 collects an input signal of the hammer 502 and an output signal of the sensor 503. The data logger 504 makes the collected input signal and output signal into data, and outputs the data to the identification processing unit 505.

The identification processing unit 505 performs fast Fourier transform (FFT) processing on each of the input signal and the output signal. An input-signal spectrum and an output-signal spectrum acquired by FFT are represented as X(ω) and Y(ω), respectively. co is a frequency. The identification processing unit 505 divides a spectrum of each frequency domain, and thereby acquires a self-frequency response function E(ω)=Y(ω)/X(ω) (step S120 in Fig. 2). In calculating the self-frequency response function, L(ω)=(Y(ω) · X*(ω))/(X(ω) · X*(ω)) is called H₁ estimation, and L(ω)=(Y(ω)·Y*(ω))/(X(ω)·Y*(ω)) is called H₂ estimation, and either estimation may be used. Note that, X*(ω) is a complex conjugate of X(ω), and Y*(ω) is a complex conjugate of Y(ω).

The identification processing unit 505 performs zooming in the acquired self-frequency response function L(ω), only on a frequency band in which close eigenvalues of interest exist (step S130 in Fig. 2). A peak appears in the frequency band in which the close eigenvalues of interest exist. Accordingly, the identification processing unit 505 specifies the frequency band in which the close eigenvalues of interest exist, by detecting a peak in the self-frequency response function L(ω). Alternatively, the identification processing unit 505 may display the self-frequency response function L(co) on a display device included in the system identification device 5, and a user who confirms the display may input a frequency band in which a peak appears. The identification processing unit 505 extracts the self-frequency response function L(co) of the specified frequency band, and performs zooming of replacing a value smaller than a threshold value with zero. The identification processing unit 505 acquires an impulse response function gₑ(t) by applying inverse FFT to a result of zooming (step S140 in Fig.2). Note that, t represents time.

Herein, a virtual two-degree-of-freedom model is assumed as a model for system identification. Note that, the virtual two-degree-of-freedom model is also called a symmetric two-degree-of-freedom spring-mass system.

Fig. 7 is a diagram illustrating a virtual two-degree-of-freedom model. The virtual two-degree-of-freedom model is a system in which single-degree-of-freedom spring-mass systems having a same mass, a same spring constant, and a same damping coefficient are connected to each other with a spring and a dashpot. M is a mass, K is a spring constant, C is a damping coefficient, F is an external force vector, and x₁ and x₂ are displacement vectors. Further, Δ_{K} represents variation of a spring constant, and Δ_{C} represents variation of a damping coefficient. The virtual two-degree-of-freedom model is a system in which a mass matrix, a stiffness matrix, and a damping matrix representing a motion equation become symmetric matrices. Also, the virtual two-degree-of-freedom model has a property that eigenvectors become symmetric, and the virtual two-degree-of-freedom model is suitable for system identification of a system having close eigenvalues.

When a self-frequency response function L₁₁ of the virtual two-degree-of-freedom model illustrated in Fig. 7 is acquired, the self-frequency response function L₁₁ is expressed as following an equation (1). s represents a complex number. s is expressed as s=i·ω (where co is a frequency, and i is an imaginary unit).
[Math. 1] $\begin{matrix}{L}_{11} \left(s\right) = \frac{{s}^{2} \left\{{Ms}^{2}+K+{Δ}_{K}+\left(C+{Δ}_{C}\right)s\right\}}{\left\{{Ms}^{2}+K+Cs\right\} \left\{{Ms}^{2}+K+2{Δ}_{K}+\left(C+2{Δ}_{C}\right)s\right\}} \\ = \frac{1}{M} - \frac{\left(C+2{Δ}_{C}\right) s + K + 2 {Δ}_{K}}{2 M \left\{{Ms}^{2}+K+2{Δ}_{K}+\left(C+2{Δ}_{C}\right)s\right\}} - \frac{Cs + K}{2 M \left\{{Ms}^{2}+K+Cs\right\}}\end{matrix}$ (1)

When impulse response function g₁₁ of the virtual two-degree-of-freedom model is acquired by applying inverse Laplace transform to the equation (1), an equation (2) is acquired. Note that, in a case where s=i· co is substituted into the equation (1), the equation (2) is acquired when inverse Fourier transform is applied to the equation (1).
[Math. 2] $\begin{matrix}{g}_{11} \left(t\right) = \frac{1}{M} δ \left(t\right) - α exp \left[-βt\right] \left\{\left(\frac{{ω}_{d 1}}{2}-\frac{{β}^{2}}{2 {ω}_{d 1}}\right)sin{ω}_{d 1}t+βcos{ω}_{d 1}t\right\} - α exp \left[-γt\right] \left\{\left(\frac{{ω}_{d 2}}{2}-\frac{{γ}^{2}}{2 {ω}_{d 2}}\right)sin{ω}_{d 2}t+γcos{ω}_{d 2}t\right\} \\ \approx α exp \left[-βt\right] \left\{\left(\frac{{ω}_{d 1}}{2}-\frac{{β}^{2}}{2 {ω}_{d 1}}\right)sin{ω}_{d 1}t+βcos{ω}_{d 1}t\right\} - α exp \left[-γt\right] \left\{\left(\frac{{ω}_{d 2}}{2}-\frac{{γ}^{2}}{2 {ω}_{d 2}}\right)sin{ω}_{d 2}t+γcos{ω}_{d 2}t\right\}\end{matrix}$ (2)

δ(t) is a Dirac's delta function. (1/M) · δ(t) in a first term is a value that is negligibly smaller than the other terms.

Note that, herein, each parameter ω_{d1}, ω_{d2}, α, β, and γ is as in an equation (3).
[Math. 3] ${ \begin{matrix}{ω}_{d 1} = \sqrt{\frac{K}{M} - {\left(\frac{C}{2 M}\right)}^{2}} \\ {ω}_{d 2} = \sqrt{\frac{K + 2 {Δ}_{K}}{M} - {\left(\frac{C + 2 {Δ}_{C}}{2 M}\right)}^{2}} \\ α = 1 / M \\ β = C / 2 M \\ γ = \left(C+2{Δ}_{C}\right) / 2 M\end{matrix}$ (3)

Accordingly, five unknown parameters exist in total. An update expression for performing parameter estimation is acquired by using a multivariable Newton's method in which sum of squares J of a difference between impulse response function gₑ(t) of an experimental value and the equation (2) is set as an objective function. Objective function J is expressed as an equation (4), the update expression is expressed as an equation (5). i represents a sampling number, and tᵢ represents a time at which an i-th sampling is performed.
[Math. 4] $J = {\sum }_{i = 1}^{N} {‖ {\hat{g}}_{11} \left({t}_{i} |{ω}_{d 1},{ω}_{d 1},α,β,γ\right) - {g}_{e} \left({t}_{i}\right) ‖}^{2}$ (4)
[Math. 5] ${ \begin{matrix}θ ′ = θ - λ ⋅ H ⋅ ∇ J \\ θ = \left[\begin{matrix}α \\ β \\ γ \\ {ω}_{d 1} \\ {ω}_{d 2}\end{matrix}\right] , ∇ J = \left[\begin{matrix}\partial J / \partial α \\ \partial J / \partial β \\ \partial J / \partial γ \\ \partial J / \partial {ω}_{d 1} \\ \partial J / \partial {ω}_{d 2}\end{matrix}\right] \\ H = \left[\begin{matrix}{\partial }^{2} J / \partial {α}^{2} & {\partial }^{2} J / \partial α \partial β & {\partial }^{2} J / \partial α \partial γ & {\partial }^{2} J / \partial α \partial {ω}_{d 1} & {\partial }^{2} J / \partial α \partial {ω}_{d 2} \\ & {\partial }^{2} J / \partial {β}^{2} & {\partial }^{2} J / \partial β \partial γ & {\partial }^{2} J / \partial β \partial {ω}_{d 1} & {\partial }^{2} J / \partial β \partial {ω}_{d 2} \\ & & {\partial }^{2} J / \partial {γ}^{2} & {\partial }^{2} J / \partial γ \partial {ω}_{d 1} & {\partial }^{2} J / \partial γ \partial {ω}_{d 2} \\ & & & {\partial }^{2} J / \partial {ω}_{d 1}^{2} & {\partial }^{2} J / \partial {ω}_{d 1} \partial {ω}_{d 2} \\ & & & & {\partial }^{2} J / \partial ω \partial {ω}_{d 2}^{2}\end{matrix}\right]\end{matrix}$ (5)

Herein, λ is a parameter for step adjustment. In a case where a parameter estimation algorithm diverges, convergence is improved when λ is adjusted within a range from 0.001 to 0.1. Especially, in system identification of a pipeline system, it is preferable to set λ to about 0.01. g^₁₁ is acquired by calculating the equation (2) using a current value of the parameter. In step S150 in Fig. 2, an initial value of each parameter (ω_{d1}, ω_{d2}, α, β, and γ), and a value of λ to be a step size are input. Note that, the identification processing unit 505 may receive input of information to be used in calculation of the initial value, and calculate the initial value, based on the input information.

The identification processing unit 505 calculates sum of squares J by the equation (4), based on impulse response function gₑ(tᵢ) acquired in step S140, and g^₁₁(tᵢ) calculated by the equation (2) using a current value of each parameter. The identification processing unit 505 updates, by the equation (5), a value of each parameter in such a way that sum of squares J becomes equal to or less than a threshold value (step S160 Fig. 2).

The identification processing unit 505 repeatedly updates the parameter, and determines, by a value of J and variation of the value, whether a value of the parameter is converged. When determining that a value of the parameter is not converged (step S170:NO in Fig. 2), the identification processing unit 505 receives input of a new initial value and λ (step S150). When determining that a value of the parameter is converged, the identification processing unit 505 calculates, by using the value of the parameter at that time, a mass M, a spring constant K, and a damping coefficient C, based on a relation in the equation (5) (step S180).

An operation of a system identification method according to the present example embodiment is verified by a numerical experiment. In order to simulate a pipeline constituted of a ductile cast-iron pipe with 100 mm diameter, true values are assumed to be M=13.3070 kg, K=2.8994×10⁹ N/m, C=1000 Ns/m, Δ_{K}=5.7989×10⁷ N/m, and Δ_{C}=666.6667 Ns/m. From those conditions, impulse response function of 20 ms at a sampling frequency of 50 kHz is generated, normal white noise with an average of zero and a variance of one is further added to the impulse response function, and the impulse response function is set as test data for testing. A value acquired by multiplying each of the true values by 0.95 is used as an initial value, and 0.01 is used as a parameter for step adjustment.

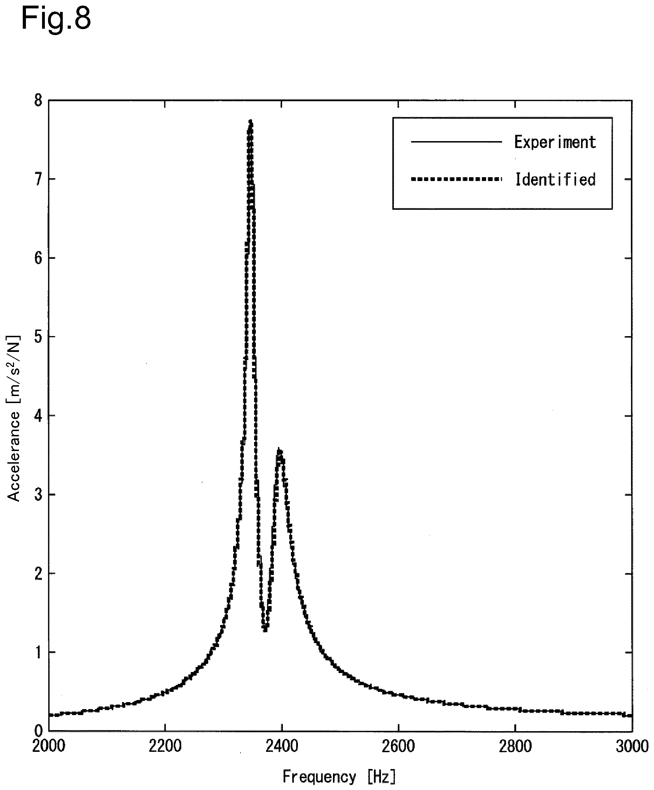

Fig. 8 is a diagram illustrating a system identification result acquired under the above-described condition. In Fig. 8, a horizontal axis represents frequency, and a vertical axis represents accelerance. In Fig. 8, a self-frequency response function (Identified) calculated by using an identified parameter, and a self-frequency response function (Experiment) of the true value are each indicated. According to Fig. 8, it can be confirmed that the true value and an identification result are both in good agreement. Note that, estimated values are M=13.3073 kg, K=2.8980×10⁹ N/m, C=999.9312 Ns/m, Δ_{K}=6.0652×10⁷ N/m, Δ_{C}=666.6730 Ns/m. Thus, an operation of an identification algorithm according to the present example embodiment can be confirmed.

Note that, when system identification of a pipeline is performed as in the second example embodiment, initial values of parameters ω_{d1}, ω_{d2}, α, β, and γ are calculated as follows. A mass M and a spring constant K being main parameters for determining the initial values are calculated by using a following equation (6).
[Math. 6] ${ \begin{matrix}M = \frac{5}{4} ρARπ \\ K = \frac{9 EI}{{R}^{3}} π\end{matrix}$ (6)

Herein, R is a radius, and A is a cross-sectional area. When a pipe length is L and a wall thickness is h, a relation A=hL holds. The radius R and the wall thickness h is acquired from a diameter and a wall thickness read from the pipeline management-ledger data. The pipe length L may be read from the pipeline management-ledger data, or may be input by a user. E is a elasticity modulus of the pipe, I is a cross-sectional secondary moment, and I=L · h³/12 holds. p is a pipe density. The elasticity modulus E and the pipe density p may be a value according to a material type read from the pipeline management-ledger data, or may be a predetermined value. It is desirable that Δ_{K} is about one-hundredth of the spring constant K, and Δ_{C} is about one-third of the damping coefficient C. The damping coefficient C for use in calculation of the initial value, and variation Δ_{C} of the damping coefficient may be a value according one or more among a diameter, a wall thickness, a material type read from the pipeline management-ledger data, or may be a predetermined value. The initial-value setting unit 307 calculates the initial values of each parameter ω_{d1}, ω_{d2}, α, β, and γ by the equation (3) using these values.
The above is a specific expression of an initial-value setting unit.

### [Experiment]

An in-service water pipe is installed in a testing pipeline, and a system identification experiment is carried out under a water-flowing environment. An in-service normal cast-iron pipe having a diameter of 100 mm and a wall thickness of 10 mm is used as a test pipe. A hydrant is installed on upper side of the pipeline, and an acceleration sensor is installed on a coupler.

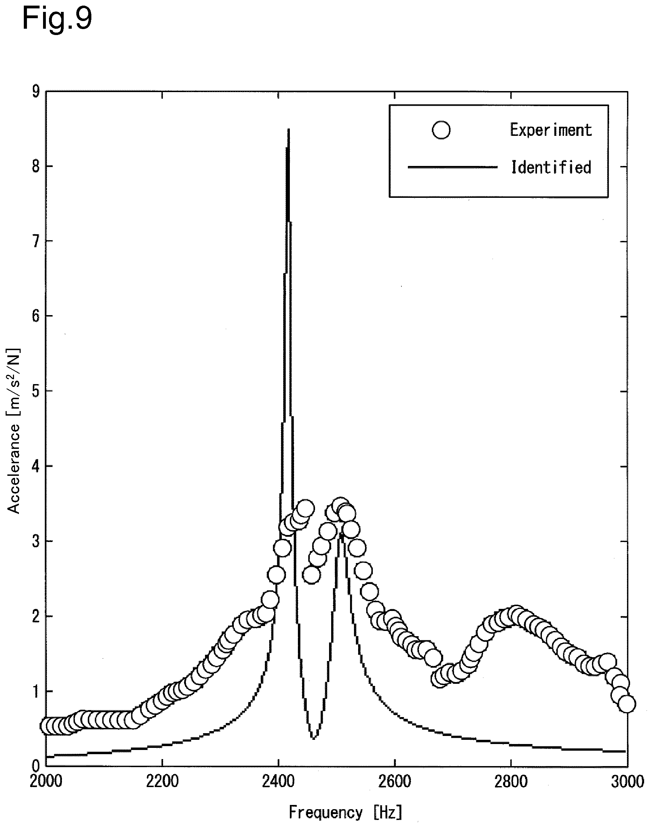

Fig. 9 is a diagram illustrating a result of the system identification experiment. In Fig. 9, a horizontal axis represents frequency, and a vertical axis represents accelerance. A circle plot in the diagram represents an experimental value (Experiment) of a self-frequency response function, and a solid line represents an identification result (Identified). As illustrated in Fig. 9, it is confirmed that peak positions and spectrum shapes of an experimental value and an estimated value are in good agreement. Note that, the acquired estimation values are M=14.8446 kg, K=3.4346×10⁹ N/m, C=903.5491 Ns/m, Δ_{K}=1.2877×10⁸ N/m, and Δ_{C}=903.5491 Ns/m.

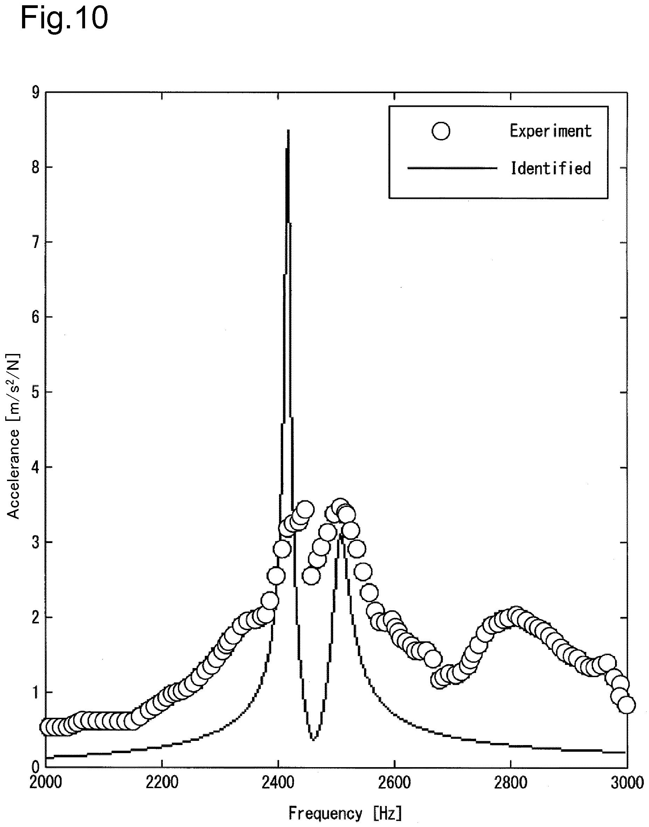

In order to demonstrate superiority in comparison with a related art, identification using an AR model used in PTL 1 is performed. Fig. 10 is a diagram illustrating a comparison result between an identification method using the AR model and the identification method according to the present example embodiment. In Fig. 10, a horizontal axis represents frequency, and a vertical axis represents accelerance.

A circle plot in Fig. 10 represents an experimental value (Experiment) of a self-frequency response function, and a reference sign L1 represents an identification result (Identified) according to the present example embodiment. Further, a reference sign L2 represents an identification result (AR) by an AR method. A calculation condition is that an AR model order is 100th, and an impulse response function of the present experiment is used as an identification input. This is exactly the same as an evaluation signal of the system identification method according to the present example embodiment. A large deviation from the experimental value is confirmed in the identification result by the AR method, and it can be confirmed that identification is difficult. This indicates that the impulse response function has a beat waveform, and that a polynomial model used in a time domain identification method has a limit in describing a characteristic of the waveform. By the above description, a result that the present example embodiment achieves n significant advantageous effect is demonstrated.

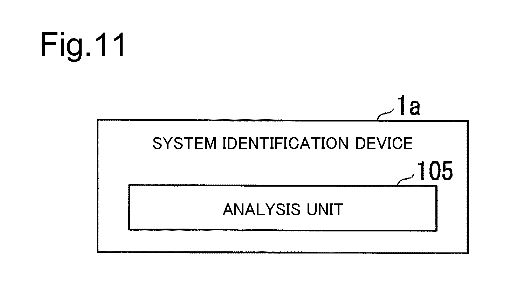

Fig. 11 is a block diagram illustrating a minimum configuration of a system identification device according to the example embodiment of the present invention. A system identification device 1a having the minimum configuration illustrated in Fig, 11 may at least include the above-described analysis unit 105 according to the first example embodiment. The analysis unit 105 calculates a self-frequency response function, based on an input signal and an output signal measured at a position where an analysis target is excited. Then, the analysis unit 105 performs system identification of the analysis target by using an impulse response function acquired from the calculated self-frequency response function, and an impulse response function of a virtual two-degree-of-freedom model in which the analysis target is modeled.

According to the present example embodiment, it is possible to perform system identification of a system having close eigenvalues, by using an impulse response function related to a self-frequency response function of a virtual two-degree-of-freedom model.
the system identification devices 1, 1a, 3, and 5 according to the above-described example embodiments include a central processing unit (CPU), a memory, an auxiliary storage device, and the like connected by a bus, and achieve some functions of the system identification devices 1, 1a, 3, and 5 according to the above-described example embodiments by executing a system identification program. Note that, some functions of the system identification devices 1, 1a, 3, and 5 may be achieved by using hardware such as an application specific integrated circuit (ASIC), a programmable logic device (PLD), and a field programmable gate array (FPGA). The system identification program may be recorded in a computer-readable recording medium. The computer-readable recording medium is, for example, a portable medium such as a flexible disk, a magneto-optical disk, a read only memory (ROM), and a compact disc read only memory (CD-ROM), and a storage device such as a hard disk built in a computer system. The system identification program may be transmitted via a telecommunication line.

A part or an entirety of the above-described example embodiments may be described as the following supplementary notes without being limited thereto.

### (Supplementary note 1)

A system identification device, including: an analysis unit that calculates a self-frequency response function, based on an input signal and an output signal being measured at a position where an analysis target is excited, and performs system identification of the analysis target by using an impulse response function acquired from the calculated self-frequency response function, and an impulse response function of a virtual two-degree-of-freedom model in which the analysis target is modeled.

### (Supplementary note 2)

The system identification device according to Supplementary note 1, wherein the analysis unit estimates the impulse response function of a virtual two-degree-of-freedom model by using a multivariable Newton's method, and performs system identification of the analysis target, based on the impulse response function acquired by estimation.

### (Supplementary note 3)

The system identification device according to Supplementary note 2, further including an initial-value setting unit that calculates an initial value to be used in a multivariable Newton's method, based on physical data of the analysis target.

### (Supplementary note 4)

The system identification device according to Supplementary note 1, wherein the analysis target is a pipeline.

### (Supplementary note 5)

The system identification device according to Supplementary note 1, further including: an excitation unit that excites the analysis target; a measurement unit that measures an input signal and an output signal at a position where the analysis target is excited by the excitation unit; and an installation positioning unit that installs the excitation unit and the measurement unit in such a way that a position where the excitation unit excites the analysis target and a position where the measurement unit measures the analysis target coincide with each other.

### (Supplementary note 6)

The system identification device according to Supplementary note 5, wherein the excitation unit is an impulse hammer with a built-in force sensor, or an electromagnetic exciter.

### (Supplementary note 7)

The system identification device according to Supplementary note 5, wherein the measurement unit is an acceleration pickup, a laser displacement gauge, a laser Doppler velocimeter, or a contact-type displacement gauge.

### (Supplementary note 8)

The system identification device according to Supplementary note 5, wherein the installation positioning unit is a hydrant coupler.

### (Supplementary note 9)

The system identification device according to Supplementary note 1, wherein the analysis unit acquires, by the system identification, a mass, a stiffness constant, and a damping coefficient of a system of the analysis target.

### (Supplementary note 10)

A system identification method, including: an excitation step of exciting an analysis target; a measurement step of measuring an input signal and an output signal at a position where the analysis target is excited in the excitation step; and an analysis step of calculating a self-frequency response function, based on the input signal and the output signal being measured in the measurement step, and performing system identification of the analysis target by using an impulse response function acquired from the calculated self-frequency response function, and an impulse response function of a virtual two-degree-of-freedom model in which the analysis target is modeled.

### (Supplementary note 11)

A recording medium recording a program causing a computer to execute: an analysis step of calculating a self-frequency response function, based on an input signal and an output signal being measured at a position where an analysis target is excited, and performing system identification of the analysis target by using an impulse response function acquired from the calculated self-frequency response function, and an impulse response function of a virtual two-degree-of-freedom model in which the analysis target is modeled.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

This application is based upon and claims the benefit of priority from Japanese patent application No. 2018-029218, filed on February 21, 2018, the disclosure of which is incorporated herein in its entirety by reference.

### [Industrial Applicability]

The present invention is applicable to system identification of a system having close eigenvalues. Thus, the present invention has a high industrial value.

### [Reference signs List]

- 1, 1a, 3, 5: System identification device
- 101, 301: Installation positioning unit
- 102, 302: Excitation unit
- 103, 303: Measurement unit
- 104, 304: Signal collection unit
- 105, 305: Analysis unit
- 106, 308: Target physical system
- 306: Storage unit
- 307: Initial-value setting unit
- 501: Hydrant coupler
- 502: Hammer
- 503: Sensor
- 504: Data logger
- 505: Identification processing unit
- 506: Pipeline

## Claims

1. A system identification device, comprising:
an analysis unit that calculates a self-frequency response function, based on an input signal and an output signal being measured at a position where an analysis target is excited, and performs system identification of the analysis target by using an impulse response function acquired from the calculated self-frequency response function, and an impulse response function of a virtual two-degree-of-freedom model in which the analysis target is modeled.

2. The system identification device according to claim 1, wherein
the analysis unit estimates the impulse response function of a virtual two-degree-of-freedom model by using a multivariable Newton's method, and performs system identification of the analysis target, based on the impulse response function acquired by estimation.

3. The system identification device according to claim 2, further comprising
an initial-value setting unit that calculates an initial value to be used in a multivariable Newton's method, based on physical data of the analysis target.

4. The system identification device according to claim 1, wherein
the analysis target is a pipeline.

5. The system identification device according to claim 1, further comprising:
an excitation unit that excites the analysis target;
a measurement unit that measures the input signal and the output signal at the position where the analysis target is excited by the excitation unit; and
an installation positioning unit that installs the excitation unit and the measurement unit in such a way that a position where the excitation unit excites the analysis target and a position where the measurement unit measures the analysis target coincide with each other.

6. The system identification device according to claim 5, wherein
the excitation unit is an impulse hammer with a built-in force sensor, or an electromagnetic exciter.

7. The system identification device according to claim 5, wherein
the measurement unit is an acceleration pickup, a laser displacement gauge, a laser Doppler velocimeter, or a contact-type displacement gauge.

8. The system identification device according to claim 5, wherein
the installation positioning unit is a hydrant coupler.

9. The system identification device according to claim 1, wherein
the analysis unit acquires, by the system identification, a mass, a stiffness constant, and a damping coefficient of a system of the analysis target.

10. A system identification method, comprising:
an excitation step of exciting an analysis target;
a measurement step of measuring an input signal and an output signal at a position where the analysis target is excited in the excitation step; and
an analysis step of calculating a self-frequency response function, based on the input signal and the output signal being measured in the measurement step, and performing system identification of the analysis target by using an impulse response function acquired from the calculated self-frequency response function, and an impulse response function of a virtual two-degree-of-freedom model in which the analysis target is modeled.

11. A recording medium recording a program causing a computer to execute
an analysis step of calculating a self-frequency response function, based on an input signal and an output signal being measured at a position where an analysis target is excited, and performing system identification of the analysis target by using an impulse response function acquired from the calculated self-frequency response function, and an impulse response function of a virtual two-degree-of-freedom model in which the analysis target is modeled.
